# EUROPÄISCHE PATENTSCHRIFT

(11) **EP 2 998 623 B1**
(45) Veröffentlichungstag und Bekanntmachung des Hinweises auf die Patenterteilung: **11.04.2018**
(21) Anmeldenummer: 14185196.4
(22) Anmeldetag: 17.09.2014
(51) Int. Cl.: F16K 11/074, F16K 21/10

(54) **Selbstschließende Sanitärarmatur mit keramischen Ventilscheiben**
Self closing sanitary fitting with ceramic valve discs
Robinetterie à fermeture automatique dotée de disques de clapet en céramique

(43) Veröffentlichungstag der Anmeldung: 23.03.2016
(73) Patentinhaber: Franke Aquarotter GmbH, 14974 Ludwigsfelde (DE)
(72) Erfinder:
(74) Vertreter: Lemcke, Brommer & Partner Patentanwälte Partnerschaft mbB

(56) Entgegenhaltungen:
- WO-A1-85/01562
- DE-A1- 4 033 733
- DE-A1- 19 923 988
- DE-U- 8 020 109

## Beschreibung

Die vorliegende Erfindung betrifft eine selbstschließende Sanitärarmatur mit keramischen Ventilscheiben.

Bei Einhebelmischern kommen seit längerem keramische Dichtscheiben zum Einsatz, die aufgrund ihrer Härte und Passgenauigkeit hohe Standzeiten gewährleisten und zu einem wartungsfreien Betrieb führen.

Selbstschlussarmaturen werden dagegen bis heute nach wie vor als Sitz-Armaturen gebaut, bei denen ein mit einer elastischen Dichtung versehenes Schließelement gegen einen Ventilsitz gehalten wird. Solche Selbstschlussarmaturen arbeiten mit einer Gegendruckkammer, welche zum Öffnen des Ventils entleert wird und sich dann langsam wieder mit Leitungswasser füllt, bis der Leitungsdruck in der Gegendruckkammer das Ventil wieder verschließt. Sitzventile sind einerseits wartungsanfällig und haben eine vergleichbar kurze Lebensdauer. Anderseits kann das in der Gegendruckkammer vorhandene Stagnationswasser bei längerer Nichtbenutzung zu Keimbildung neigen und so zu hygienischen Problemen führen.

Aus der DE 199 23 988 ist ein Einhebelmischer mit keramischen Dichtscheiben bekannt, bei dem der Betätigungshebel als Hohlkörper ausgeführt ist, in welchem eine Selbstschlusseinrichtung untergebracht ist. Diese besteht aus einem mit Hydrauliköl gefüllten Dämpfer und einer Rückstellfeder, durch die der Mischerhebel selbsttätig von einer Öffnungsstellung zurück in eine Schließstellung bewegt wird und dabei die Armatur schließt. Allerdings erfordert die Rückstellung des Bedienhebels aufgrund der zwischen den keramischen Dichtscheiben erforderlichen großen Andruckkräfte eine hohe Rückstellkraft, so dass das selbsttätige Schließen der Armatur störanfällig ist und ein Benutzer eine entsprechend große Kraft zum Öffnen der Armatur aufwenden muss. Mit dem üblichen Funktionsprinzip von Selbstschlussarmaturen, bei denen der Benutzer zum Öffnen des Ventils ein Betätigungselement herunterdrücken muss, ist dieses Prinzip nicht vereinbar.

Eine Aufgabe der vorliegenden Erfindung besteht darin, eine Selbstschlussarmatur mit keramischen Ventilscheiben anzugeben, welche nach dem Bedienprinzip herkömmlichen Selbstschlussarmaturen arbeitet.

Die vorliegende Erfindung schlägt eine selbstschließende Sanitärarmatur vor, die eine Ventilanordnung mit keramischen Ventilscheiben besitzt. Dieses umfasst eine bewegliche, in einer axialen Richtung verschiebbare Ventilscheibe und mindestens eine statische Ventilscheibe. Die bewegliche Ventilscheibe ist über ein axial wirkendes Stellelement mit einem linear verschiebbaren Dämpferorgan eines Dämpfers mechanisch gekoppelt. Wird das Dämpferorgan zum Öffnen der Sanitärarmatur von einer Ausgangslage in eine Endlage ausgelenkt und dabei die Ventilscheibe über das Stellelement in eine Öffnungsstellung bewegt, so bewegt sich das Dämpferorgan durch die von einem Rückstellelement ausgeübte Rückstellkraft selbsttätig gegen den Widerstand des Dämpfers zurück in die Ausgangslage und führt dabei die bewegliche Ventilscheibe über das Stellelement in die Schließstellung zurück.

Zusätzlich kann die Sanitärarmatur mit einer Mischerbaugruppe ausgestattet werden. Eine solche Mischerbaugruppe umfasst ein drehbares Mischerbauteil und kann mit der erfindungsgemäßen Ventilanordnung über das Stellelement koaxial gekoppelt werden, indem dieses beispielsweise Linearbewegungen auf die bewegliche Ventilscheibe und eine Rotationsbewegungen auf das drehbare Mischerbauteil überträgt.

Bei einer bevorzugten Ausführungsform der Erfindung ist vorgesehen, die Ventilanordnung als keramisches Dreischeiben-Ventil auszuführen, bei dem eine bewegliche Ventilscheibe zwischen je einer zulaufseitigen und einer auslaufseitigen statischen Ventilscheibe angeordnet ist. Die beiden statischen Ventilscheiben weisen einen oder mehrere zueinander korrespondierende Durchlassöffnungen auf. Zwischen den beiden statischen Ventilscheiben ist die bewegliche Ventilscheibe aus einer Schließstellung, in der sie einen Wasserfluss zwischen den jeweils korrespondierenden Durchlassöffnungen versperrt, in eine Öffnungsstellung, in der sie einen Wasserfluss freigibt, bewegbar und umgekehrt.

Aufgrund der glatten Oberflächen keramischer Bauteile sind die zwischen diesen wirkenden Reibungskräfte reduziert. Außerdem können die zwischen den einzelnen Ventilscheiben wirkenden Druckkräfte vermindert und besser verteilt werden. Die um das Ventil dicht zu halten erforderliche Anpresskraft bzw. Vorspannung der Ventilscheiben kann somit vermindert werden, so dass im Ergebnis die zwischen den Ventilscheiben wirkenden Reibungskräfte verringert werden.

Damit vor allem die im geschlossenen Zustand auf die bewegliche Ventilscheibe wirkenden Kräfte zumindest teilweise kompensiert werden, ist bei einer Weiterbildung vorgesehen, dass die bewegliche Ventilscheibe auf ihrer zur auslaufseitigen statischen Ventilscheibe weisenden Seite mindestens eine Druckausgleichsfläche besitzt, zu der in einem geschlossenen Ventilzustand über einen Entlastungskanal eine fluidleitende Verbindung zu mindestens einer Zulauföffnung in der zulaufseitigen Ventilscheibe besteht.

Durch geeignete Anordnung und Dimensionierung von einer oder mehrerer Druckausgleichsflächen, die über Entlastungskanäle im geschlossenen Zustand von Wasser hinterströmt werden können, werden zwischen den Ventilscheiben aufgrund des Wasserdrucks wirkende Kräfte reduziert. Die zwischen den Ventilscheiben wirkenden Andruckkräfte können dadurch weiter verringert und unabhängig von der Stellung des Ventils und vom Leitungsdruck vergleichsweise konstant gehalten werden. Dies führt zu einer geringeren Reibungskraft zwischen den Ventilscheiben und zu reduziertem Verschleiß.

Vorzugsweise weist die bewegliche Ventilscheibe mindestens eine Ventilöffnung auf, die in der Öffnungsstellung mit den Durchlassöffnungen der zulaufseitigen und der auslaufseitigen Ventilscheibe korrespondiert und mit diesen zumindest teilweise in Deckung gebracht ist, um den Wasserfluss freizugeben. In diesem Fall kann die fluidleitende Verbindung im geschlossenen Ventilzustand durch die Ventilöffnung verlaufen, so dass in der Ventilöffnung der Wasserdruck am Zulauf anliegt.

Die Druckausgleichsfläche wird vorzugsweise durch eine Ausnehmung auf der einem Auslauf der Sanitärarmatur zugewandten Seite der beweglichen Ventilscheibe gebildet. Dies ist vorteilhaft, da die bewegliche Ventilscheibe in der Praxis ohnehin im Vergleich zu den statischen Ventilscheiben stärker ausgelegt werden sollte, als die statischen Ventilscheiben, um genügend Angriffsfläche für einen Betätigungsmechanismus zu bieten.

Alternativ kann aber auch die auslaufseitige Ventilscheibe eine entsprechende Ausnehmung aufweisen, wobei als flüssigkeitshinterströmte Druckausgleichsfläche die zu der Ausnehmung weisende Fläche der beweglichen Ventilscheibe wirkt.

Bei einer weiteren bevorzugten Ausführungsform sind Dämpfer und Rückstellelement Teil eines Schließantriebs sind, der derart ausgebildet ist, dass das Stellelement bei seiner Rückbewegung von der Endlage zurück in die Ausgangslage zunächst einen Leerhub ausführt, bevor ein am Stellelement vorgesehenes Mitnehmerorgan eine Schließbewegung der beweglichen Ventilscheibe bewirkt. Durch den Leerhub wird eine Phase gleichbleibenden Wasserflusses realisiert.

Außerdem kann der Dämpfer zusätzlich so ausgebildet werden, dass seine Dämpfungskraft im Anschluss an den Leerhub zumindest vermindert ist. Hierdurch wird erreicht, dass der Schließvorgang nach der Phase gleichbleibenden Wasserflusses beschleunigt erfolgt, so dass kein langes Nachlaufen der Armatur auftritt.

Bei einer bevorzugten Ausführungsform umfasst der Dämpfer einen Hydraulikkolben, der in einem mit einem Hydraulikmittel gefüllten Hydraulikzylinder läuft und bei einer Rückbewegung zurück in die Ausgangslage Hydraulikmittel verdrängt, welches hierbei durch eine Engstelle hindurchfließen muss. Die Verwendung eines geschlossenen hydraulischen Dämpfers ermöglicht einen kostengünstigen, langlebigen und zuverlässigen Aufbau des Schließantriebs. Durch Vermeidung von Stagnationswasser erfüllt die Sanitärarmatur gegenüber herkömmlichen Selbstschlussarmaturen mit Gegendruckkammer höhere Hygienestandards.

Die genannte Verringerung der Dämpfungskraft im Anschluss an den Leerhub kann bei einem derartigen hydraulischen Dämpfer dadurch verringert werden, dass der Hydraulikzylinder in einem Bereich vor der Ausgangslage einen erweiterten Durchmesser aufweist, so dass seine Dämpfungskraft in diesem Bereich vermindert ist.

Bei einer besonders bevorzugten Ausführungsform verläuft die Engstelle, durch die das Hydraulikmittel fließen muss, durch das Stellelement. Insbesondere kann die Engstelle durch eine axiale Bohrung des Stellelements gebildet werden, in die eine Stellschraube eingesetzt ist, mittels der der Querschnitt der Engstelle reguliert werden kann. Somit lässt sich auf einfache Weise eine von außen zugängliche Regulierung der Dämpfungskraft des Dämpfers und damit der Öffnungszeit der Sanitärarmatur erreichen.

Außerdem kann in dem Kolben mindestens ein Einwegventil vorgesehen werden, durch welches Hydraulikflüssigkeit bei einer Bewegung des Kolbens in Öffnungsrichtung fließen kann. Alternativ kann auch mindestens ein Kolbenring vorgesehen werden, der schwimmend gelagert ist, so dass er bei einer Bewegung des Kolbens in Schließlichtung dichtend gegen eine Dichtfläche am Kolbenrand anliegt und bei einer Bewegung des Kolbens in Öffnungsrichtung von Hydraulikflüssigkeit umströmt werden kann. Damit wird erreicht, dass bei einer Bewegung des Kolbens in der Betätigungsrichtung zum Öffnen der Sanitärarmatur die Betätigung nicht gegen den Widerstand des Dämpfers erfolgen muss.

Vorzugsweise kann das Stellelement als Kolbenstange ausgebildet sein, die mit dem Kolben axial starr verbunden ist. Hierdurch wird ein besonders einfacher Aufbau erreicht. Der Leerhub wird hierbei dann vorzugsweise durch ein Spiel bei der Kopplung zwischen Stellelement bzw. dessen Mitnehmerorgan und dem von dem Schließantrieb betätigten Ventil realisiert. Alternativ kann jedoch auch in der Lagerung des Stellelements am Kolben durch entsprechendes Spiel bei der axialen Lagerung ein Leerhub realisiert werden.

Zusätzlich ist es möglich, die Kolbenstange drehbar mit dem Kolben zu verbinden, so dass Drehbewegungen der Kolbenstange auf eine Mischerbaugruppe übertragen werden können, um so gleichzeitig die Temperatur des Wasserflusses einstellen zu können. Hierzu kann beispielsweise das Mitnehmerorgan als profilierter Zapfen ausgebildet werden, welcher eine drehinvariante Steckverbindung mit der der Mischerbaugruppe, ermöglicht.

Sanitärarmaturen umfassen ein metallisches Armaturengehäuse, in welches, beispielsweise in Form einer Ventilkartusche, die Ventilanordnung eingesetzt wird. Meist sind solche Armaturengehäuse insbesondere im Bereich eines Auslaufs wasserführend, kommen also mit dem Wasser in direkten Kontakt. Im Rahmen der vorliegenden Erfindung ist bei einer vorteilhaften Weiterbildung allerdings vorgesehen, dass der Wasserfluss von der Ventilanordnung bis zu dem Auslauf über nichtmetallische Leitungen innerhalb des Armaturengehäuses geführt wird. Hierdurch braucht das Armaturengehäuse was seine Metalllegierung betrifft nicht in Trinkwasserqualität ausgeführt werden und kann somit kostengünstiger hergestellt werden. Außerdem erweisen sich nichtmetallische Leitungen aus hygienischen Gesichtspunkten als vorteilhaft gegenüber einem metallischen wasserführenden Armaturengehäuse.

Weitere vorteilhafte Weiterbildungen und Vorteile der Erfindung werden anhand der Ausführungsbeispiele und der beigefügten Zeichnungen beschrieben. Hierbei zeigt:
- Figur 1: einen Längsschnitt entlang der Mittelachse einer Selbstschlussarmatur,
- Figur 2a: einen Längsschnitt durch einen Schließantrieb für die Selbstschlussarmatur aus Figur 1,
- Figur 2b: eine isometrische Ansicht des Schließantriebs,
- Figur 2c: einen Längsschnitt durch den Schließantrieb,
- Fig. 2d: eine isometrische Ansicht des Schließantriebs,
- Fig. 2e: eine isometrische Ansicht des Schließantriebs,
- Fig. 3a: eine isometrische Ansicht eines Stellelements für die Selbstschlussarmatur,
- Fig. 3b: einen Längsschnitt durch das Stellelement,
- Fig. 4: einen Längsschnitt durch die Sanitärarmatur bei geschlossener Ventilstellung senkrecht zu der Schnittebene in Figur 1.

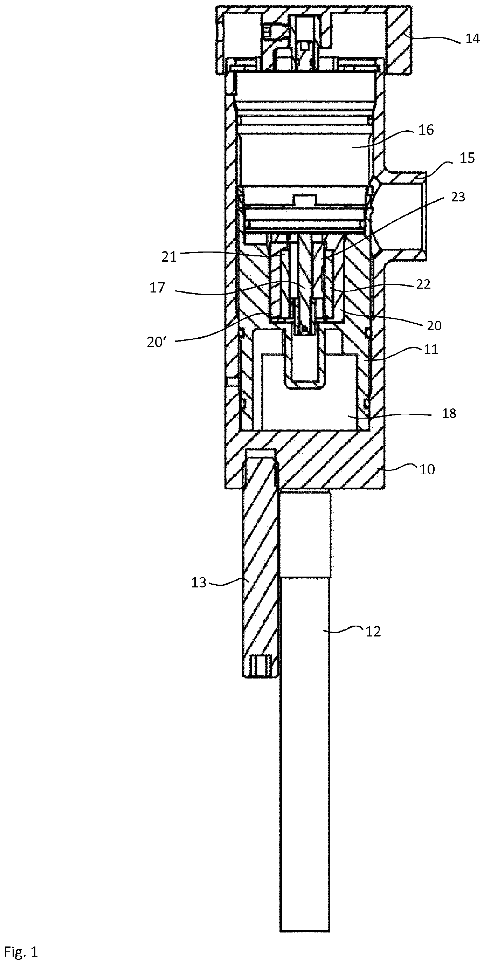

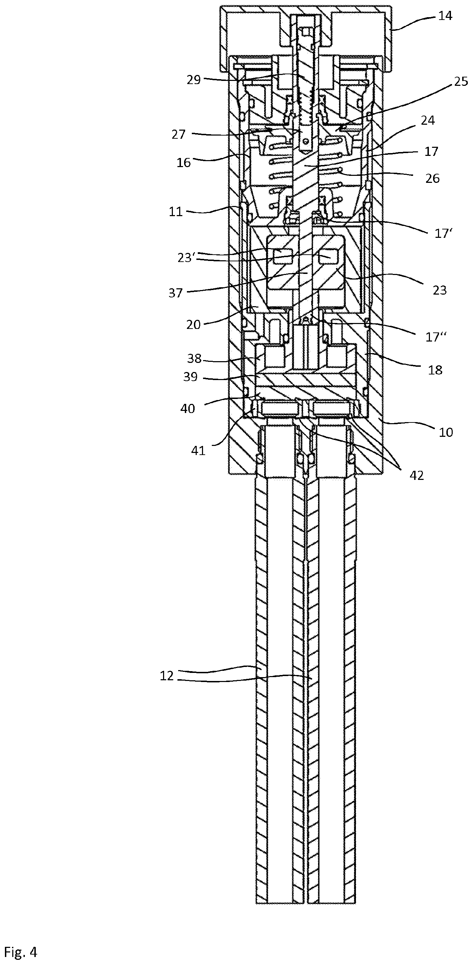

Die in den Figuren 1 und 4 geschnitten dargestellte Selbstschlussarmatur besitzt ein Armaturengehäuse 10 in welches eine Ventilkartusche 11 eingesetzt ist. Am unteren Ende des Ventilgehäuses 10 ist eine Wasserzuleitung 12 angeschlossen. Ein Montagebolzen 13 dient zur Befestigung der Selbstschlussarmatur an einem Waschtisch.

Am oberen Ende der Sanitärarmatur befindet sich ein als Bedienknopf bzw. Taste ausgebildetes Bedienelement 14. Durch Herunterdrücken des Bedienknopfs 14 wird ein Wasserfluss zu einem Auslauf 15 des Armaturengehäuses 10 freigegeben. Ein mit der Ventilkartusche 11 verbundener Schließantrieb 16 sorgt dafür, dass der Wasserfluss nach einer vorgegebenen Zeitspanne wieder abgestellt wird und die Selbstschlussarmatur schließt.

Die Sanitärarmatur besitzt eine Ventilanordnung mit keramischen Ventilscheiben. Diese Ventilanordnung umfasst zwei statische Ventilscheiben 21, 22, nämlich eine zulaufseitige Scheibe 21 und eine auslaufseitige Ventilscheibe 22, sowie eine zwischen den beiden statischen Ventilscheiben 21, 22 angeordnete bewegliche Ventilscheiben 23. Die drei keramischen Ventilscheiben 21, 23, 22 sind in einem entsprechenden Patronengehäuse 20', welches mit einem Gehäusedeckel verschlossen ist, zu einer Ventileinheit 20 angeordnet.

Die Ventilanordnung dient als Schließventil der Sanitärarmatur und ist, ohne dass die Erfindung hierauf beschränkt wäre, im Ausführungsbeispiel als Schieberventil mit drei Ventilscheiben realisiert. Anstelle eines Dreischeibenventils kann aber auch ein Zweischeibenventil mit lediglich einer statischen und einer beweglichen Ventilscheibe verwendet werden.

Die Betätigung der Ventilanordnung durch ein als Kolbenstange ausgeführtes Stellelement 17, das sich von dem Bedienknopf 14 durch den Schließantrieb 16 hindurch erstreckt und mit einer Schulter 17' an der beweglichen Ventilscheibe 23 angreift. Durch Herunterdrücken des Bedienknopfes 14 wird die bewegliche Ventilscheibe 23 über die Kolbenstange 17 nach unten in eine Öffnungsstellung bewegt und gibt so einen Wasserfluss frei. Der Schließantrieb 16 sorgt dafür, dass die Kolbenstange 17 und mit ihr die bewegliche Ventilscheibe 23 nach Ablauf der vorgegebenen Öffnungszeit wieder nach oben in eine Schließstellung bewegt wird.

Unterhalb der Ventilanordnung befindet sich ein Bauraum 18, in den eine separate Mischerbaugruppe eingesetzt ist. Die Mischerbaugruppe besitzt ein Mischeroberteil 38, welches drehfest aber axial verschieblich mit der Kolbenstange 17 verbunden ist, ein Mischerunterteil 41, welches statisch mit dem Gehäuse der Ventilkartusche 10 verbunden ist, sowie zwei keramische Mischerscheiben 39, 40, welche dazu dienen in an sich bekannter Weise über separate Zuleitungen 12 zugeführtes Warm- und Kaltwasser in einstellbarem Mischungsverhältnis miteinander zu Mischwasser zu verschneiden. Das so gemischte Mischwasser gelangt bei geöffneter Ventileinheit 20 zum Auslauf 15 der Sanitärarmatur. Das Mischeroberteil 38 dient hierbei als Mitnehmer für die obere, drehbar gelagerte Mischerscheibe 39 und wird drehfest aber axial verschieblich mit dem profilierten unteren Ende 17" der Kolbenstange 17 verbunden. Die untere, statische Mischerscheibe 40 wird zusammen mit dem Mischerunterteil 41 starr in das Gehäuse der Ventilkartusche 11 eingesetzt. Das Mischerunterteil 41 dient als dichtender Gehäuseabschluß mit Zulauföffnungen für Warm- und Kaltwasser, an die über entsprechende Dichtungen die Zuleitungen 12 münden. Alternativ kann, je nach Bauform der Armatur anstelle einer solchen Mischerbaugruppe ein Leerelement eingesetzt werden, so dass der Bauraum 18 dann im Wesentlichen frei bleibt.

Der Schließantrieb 16 besitzt ein Dämpfergehäuse 24, welches als Zylinder für einen darin in axialer Richtung beweglichen Kolben 25 dient. Das als Kolbenstange wirkende Stellelement 17 ist in axialer Richtung starr mit dem Kolben 25 verbunden, gegenüber diesem jedoch drehbar gelagert. Im unteren Teil des Dämpfergehäuses 24 ist unterhalb des Kolbens 25 eine Schraubendruckfeder 26 angeordnet, die auf den Kolben 25 eine nach oben gerichtete Rückstellkraft ausübt. Anstelle einer Schraubendruckfeder können natürlich auch andere Arten von Kraftspeichern als Rückstellelement eingesetzt werden, wie beispielsweise Gasdruckfedern, Tellerfedern, Ringfedern, Elastomerfedern o.ä..

Wird das Stellelement 17 und mit diesem der Kolben 25 nach unten gedrückt, so verdrängt der Kolben 25 im Dämpfergehäuse 24 befindliche Hydraulikflüssigkeit. Über eine Schulter 17'greift die Kolbenstange beim Herunterdrücken an die bewegliche Ventilscheibe 23 und bewegt diese in die untere Öffnungsstellung, so dass das Ventil einen Wasserfluss zum Auslauf 15 der Sanitärarmatur freigibt. Die Rückstellfeder 26 sorgt anschließend dafür, dass der Kolben 25 zurück in seine obere Endlage innerhalb des Dämpfergehäuses 24 bewegt wird. Hierbei muss die oberhalb des Kolbens 25 befindliche Hydraulikflüssigkeit verdrängt werden und durch eine Engstelle zurück in den unteren Bereich des Dämpfergehäuses 24 fließen. Die Engstelle wird im Ausführungsbeispiel durch eine axiale Bohrung 27 im Inneren der Kolbenstange 17 gebildet. In der Bohrung 27 ist ein Gewinde 28 ausgebildet, in welches eine Stellschraube 29 eingesetzt ist. Mit Hilfe der Stellschraube 29 kann der Querschnitt der Engstelle und damit die Öffnungszeit des Ventils variiert werden.

Um zu vermeiden, dass die Kolbenstange 17 zur Betätigung des Ventils gegen die Kraft des Dämpfers 16 heruntergedrückt werden muss, ist der Kolben 25 mit einer Kolbendichtung (Kolbenring) ausgestattet, die in der Art eines Einwegventils arbeitet. Die Kolbendichtung ist hierzu schwimmend in eine in Umfangsrichtung verlaufende Nut in der Seitenfläche des Kolbens 25 eingesetzt. Die untere Begrenzungsfläche dieser Nut bildet eine Dichtfläche, gegen die die Kolbendichtung bei einer Bewegung des Kolbens in Schließrichtung dichtend anliegt. Bei einer Bewegung des Kolbens 25 in Öffnungsrichtung des Ventils liegt die Kolbendichtung dagegen an der oberen Begrenzungsfläche der Nut an, so dass Hydraulikflüssigkeit unterhalb der Kolbendichtung durch die Nut über entsprechende Durchbrüche an der Oberseite der Nut an der Kolbendichtung vorbeiströmen kann. Alternativ zu der Ausgestaltung mit schwimmender Kolbendichtung kann in den Boden des Kolbens 25 auch ein Rückschlagventil eingesetzt sein.

In einem oberen Bereich 33 nahe der Endlage des Kolbens 25 ist der Durchmesser des Dämpfergehäuses 24 geringfügig erweitert. Hierdurch wird erreicht, dass in diesem Bereich der Kolben 25 mit wesentlich niedrigerem Widerstand nach oben bewegt werden kann, da die Hydraulikflüssigkeit um die Kolbendichtung 31 herumfließen kann. Der Punkt, an dem der Kolben 25 bei einer Aufwärtsbewegung den Bereich 33 mit erweitertem Durchmesser erreicht entspricht dabei im Wesentlichen dem Punkt, an dem ein im unteren Bereich der Kolbenstand 17 vorgesehenes Mitnehmerorgan 17" nach Ausführen eines Leerhubs an die bewegliche Ventilscheibe 23 angreift und diese bei seiner weiteren Aufwärtsbewegung zurück in die Schließstellung führt. Somit wird nach der Ausführung des Leerhubs, welcher die Öffnungszeit des mit dem Schließantrieb 16 betriebenen Ventils definiert wird, ein schneller Schließvorgang des Ventils durchgeführt, so dass ein längeres Nachlaufen von Wasser vermieden wird.

Anstelle eines Abschnitts mit erweitertem Durchmesser kann in diesem Bereich des Hydraulikzylinders in dessen Innenwand auch einfach eine Nut bzw. Ausnehmung vorgesehen werden, über die die Kolbendichtung umströmt werden kann. Ebenso wäre es möglich, überentsprechende seitliche Abgänge im Hydraulikzylinder eine externe Bypassleitung vorzusehen, über die Hydraulikflüssigkeit von dem oberen zurück in die unteren Bereich des Hydraulikzylinders strömen kann, um den durch die Engstelle gebildeten Widerstand des Dämpfers während der Schließhubs des Ventils zu vermindern.

Über den Betätigungsknopf 14 wird die Kolbenstange 17 nach unten gedrückt. Hierbei wird der Kolben 25 des Dämpfers 16 von der Ausgangslage in seine untere Endlage geführt. Die Rückstellfeder 26 wird hierbei komprimiert. Die unterhalb des Kolbens 25 befindliche Hydraulikflüssigkeit wird beim Herunterdrücken des Kolbens verdrängt und fließt in der vorstehend beschriebenen Weise an der Kolbendichtung 31 des Kolbens 25 vorbei in den oberen Bereich des Dämpfergehäuses 24.

Beim Herunterdrücken stößt die Schulter 17' der Kolbenstange 17 nach einem Leerhub von etwa einigen mm an die bewegliche Ventilscheibe 23 und führt diese bei ihrer weiteren Abwärtsbewegung in die untere Öffnungsstellung des Ventils. Die beiden seitlich der axial verlaufenden Kolbenstange 17 angeordneten Durchlassöffnungen 23' in der beweglichen Ventilscheibe 23 kommen hierbei in Deckung mit entsprechenden Durchlassöffnungen in den vor und hinter der beweglichen Ventilscheibe 23 angeordneten statischen Ventilscheiben 21, 22 und geben so einen Wasserfluss durch das Ventil frei.

Wird der Bedienknopf 14 nach dem Herunterdrücken losgelassen, so beginnt die Rückstellfeder 26 den Kolben 25 zurück in seine Ausgangslage zu schieben. Hierbei muss die oberhalb des Kolbens 25 befindliche Hydraulikflüssigkeit durch die von der axialen Bohrung 27 mit zugehöriger Einstellschraube 29 in der Kolbenstange 17 gebildete Engstelle fließen. Hierdurch wird die Aufwärtsbewegung des Kolbens 25 gedämpft und somit verlangsamt.

Zunächst führt die Kolbenstange 17 hierbei wieder einen Leerhub aus, bis die Mitnehmer 17" am unteren Ende der Kolbenstange 17 die untere Kante der beweglichen Ventilscheibe 23 erreichen. Zu diesem Zeitpunkt erreicht der Kolben 25 den Bereich 33 des Dämpfergehäuses 24, in welchem sich der Zylinderdurchmesser erweitert. Der Kolben 25, dessen Kolbendichtung ab diesem Punkt von der Hydraulikflüssigkeit umströmt werden kann, führt somit eine schnelle Aufwärtsbewegung aus, bei der er die bewegliche Ventilscheibe 23 mit in die Schließstellung nimmt. Der Wasserfluss wird somit nach dem Ende des Leerhubes rasch und ohne langes Nachlaufen abgestellt.

Über das als Kolbenstange ausgeführte Stellelement 17 werden gleichzeitig das als Schieberventil ausgeführte Schließventil 20 und die Mischerbaugruppe mit den keramischen Mischerscheiben 39, 40 koaxial betätigt, indem eine axiale Linearbewegung des Stellelements 17 über die Schulter 17' bzw. die Mitnehmer 17" auf die bewegliche Ventilscheibe 23 übertragen wird, während gleichzeitig die Mitnehmer 17" eine Drehbewegung des Bedienknopfes 14 über das Mischeroberteil 38 auf die drehbare Ventilscheibe 39 übertragen.

In den unteren Bauraum 18 der Ventilkartusche 11 können alternativ entweder eine Mischerbaugruppe 37 oder ein Leerelement 37' eingesetzt werden. Die Mischerbaugruppe 37 stellt einen mechanischen Mischer mit keramischen Mischerscheiben für Warm- und Kaltwasser dar. Ventilkartusche 11 und Schließantrieb 16 werden an dem Montagekranz zusammengesteckt und mit den Rastnasen in den Ausnehmnung 11" miteinander verrastet. Das Stellelement 17 durchquert beide Baugruppen. Die Ventileinheit 20, welche hier auch als Ventilpatrone bezeichnet wird, umfasst ein Gehäuse 20', welches mit einem Gehäusedeckel verschlossen ist. Eine Biegefeder hält Gehäuse 20' und Gehäusedeckel zusammen und erzeugt eine Andruckkraft für die innerhalb des Gehäuses 20' befindlichen Ventilscheiben 21, 23 und 22. Der Gehäusedeckel weist zwei Durchlassöffnungen auf, die mit zugehörigen Dichtungen versehen sind. Korrespondierende Durchlassöffnungen mit entsprechenden Dichtungen befinden sich auf der Rückseite des Gehäuses 20'. Durch eine Öffnung im oberen Bereich der Ventilpatrone 20 erstreckt sich im zusammengebauten Zustand das stabförmige Stellelement 17. Das bewegliche Ventilelement 23 umfasst eine nach vorne hin offene U-förmige Ausnehmung, durch welche das Stellelement 17 führt.

Der Durchlass in der auslaufseitigen statischen Ventilscheibe 22 kann von der beweglichen Ventilscheibe 23 versperrt sein. Wird die bewegliche Ventilscheibe 23 nach unten in die Öffnungsstellung bewegt, so gibt die Durchlassöffnung 23' in der beweglichen Ventilscheibe 23 die Durchlassöffnung in den beiden statischen Ventilscheiben 21, 22 frei, so dass Wasser zum Auslauf 15 der Sanitärarmatur strömen kann.

Die Dichtungen in den gehäuseseitigen Durchlässen sind als Lippen- bzw. Lamellendichtungen aus einem weichelastischen Material wie etwa Gummi oder Silikon ausgeführt, deren seitliche Flanken durch Druckbeaufschlagung gegen die Ventilscheiben 21 bzw. 22 sowie die zulaufseitigen und auslaufseitigen Gehäuseteile der Ventilkartusche 11 gepresst werden, so dass die Dichtwirkung verstärkt wird. Liegt hingegen kein Wasserdruck an, so ist die Andruckkraft der Lippen- bzw. Lamellendichtungen und damit die zwischen den Ventilscheiben 22, 23 und 21 wirkende Andruck- und Reibungskraft reduziert. Außerdem befindet sich in der beweglichen Ventilscheibe 23 ein kleiner Entlastungskanal, der in der Schließstellung innerhalb der Durchlassöffnung der zulaufseitigen statischen Ventilscheibe 21 mündet, so dass eine fluidleitende Verbindung zwischen der Zulaufseite und der Durchlassbohrung in der beweglichen Ventilscheibe 22 besteht.

Seitlich versetzt zu der Schnittebene und zu der Durchlassöffnung der auslaufseitigen statischen Ventilscheibe 22 weist die bewegliche Ventilscheibe 23 eine über einen weiteren Entlastungskanal mit der Durchlassöffnung verbundene Ausnehmung auf, die im geschlossenen Ventilzustand von Wasser hinterströmt werden kann und als Druckausgleichsfläche innerhalb des Dreischeibenventils dient. Das Vorsehen der Entlastungskanäle und Druckausgleichsflächen sowie die Verwendung der Lippen- bzw. Lamellendichtungen führt zu einer deutlichen Verringerung der Reibungskräfte zwischen den Ventilscheiben 21, 23, 22, so dass die Ventilanordnung mit vergleichsweise geringen Betätigungskräften geöffnet bzw. geschlossen werden kann.

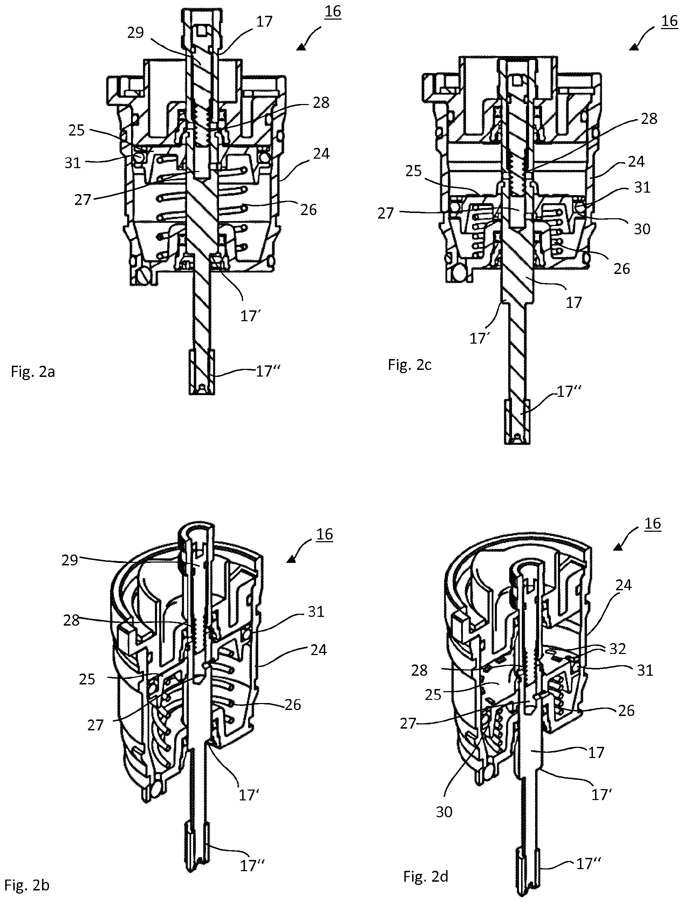

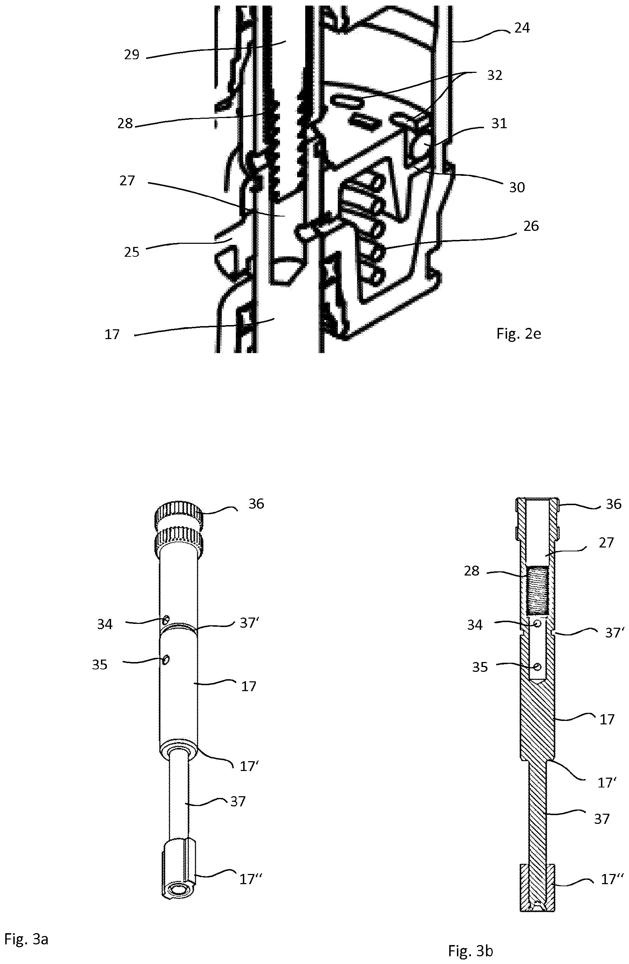

In den Figuren 2a bis 2e ist ein hydraulisch gedämpfter Schließantrieb 16 separat gezeigt. Er besitzt ein Dämpfergehäuse 24 in welches mittig das stabförmige Stellelement 17 eingesetzt ist. Rastnasen im unteren Bereich des Schließantriebs 16 verrasten beim Zusammenbau des Schließantriebs 16 mit der Ventilkartusche 11 in den Ausnehmungen am Montagekranz des Kartuschengehäuses.

In Fig. 2a ist der Schließantrieb 16 mit eingesetztem Stellelement 17 in einem Axialschnitt gezeigt. Das Dämpfergehäuse 24 des Schließantriebs 16 dient hierbei als Hydraulikzylinder für einen darin in axialer Richtung beweglichen Kolben 25, der mit dem stabförmigen Stellelement 17 beispielsweise mittels eines Sicherungsrings verbunden und gegenüber diesem drehbar gelagert ist. Das Stellelement 17 stellt damit eine Kolbenstange eines hydraulischen Dämpfers 16 dar.

Im unteren Teil des Dämpfergehäuses 24 ist unterhalb des Kolbens 25 eine Schraubendruckfeder 26 angeordnet, die auf den Kolben 25 eine nach oben gerichtete Rückstellkraft ausübt. Anstelle einer Schraubendruckfeder können natürlich auch andere Arten von Kraftspeichern als Rückstellelement eingesetzt werden, wie beispielsweise Gasdruckfedern, Tellerfedern, Ringfedern, Elastomerfedern o.ä..

Wird die Kolbenstange 17 und damit der Kolben 25 nach unten gedrückt, so verdrängt der Kolben 25 im Dämpfergehäuse befindliche Hydraulikflüssigkeit, die an dem schwimmend gelagerten Kolbenring 30 vorbei in den Bereich oberhalb des Kolbens 25 fließen kann. Über die Schulter 17' bewegt das Stellelement 17 beim Herunterdrücken die bewegliche Ventilscheibe 23 der Ventileinheit 20 in die Öffnungsstellung und gibt so einen Wasserfluss frei. Die Rückstellfeder 26 sorgt anschließend dafür, dass der Kolben 25 zurück in seine obere Endlage innerhalb des Dämpfergehäuses 24 bewegt wird. Hierbei muss die oberhalb des Kolbens 25 stehende Hydraulikflüssigkeit verdrängt werden und durch eine Engstelle zurück in den unteren Bereich des Dämpfergehäuses 24 fließen. Die Engstelle wird im Ausführungsbeispiel durch die axiale Bohrung 27 im Inneren des Stellelements 17 gebildet. Die axiale Bohrung 27 ist mit einem Gewinde 28 versehen, in welches die Stellschraube 29 eingesetzt ist, mittels der der Querschnitt der Engstelle und damit die Öffnungszeit des Ventils variiert werden kann. Im oberen Bereich 33 des Dämpfergehäuses 24 ist der Durchmesser des Dämpfers geringfügig erweitert, so dass in diesen Bereich der Kolben 25 mit wesentlich niedrigerem Widerstand nach oben bewegt werden kann, da die Hydraulikflüssigkeit um die Kolbendichtung 30 herumfließen kann.

In den Figuren 3a und 3b ist das Stellelement 17 vergrößert gezeigt. Innerhalb des Stellelements 17 ist eine axiale Bohrung 27 angebracht, welche im unteren Bereich leicht konisch verläuft. Im mittleren Bereich der Axialbohrung 27 ist außerdem ein Gewinde 28 eingeschnitten, in welches die Stellschraube 29 eingesetzt werden kann. Über zwei radial verlaufende Bohrungen 34, 35 kann Hydraulikflüssigkeit durch die axiale Bohrung 27 vom oberen zurück in den unteren Bereich des Dämpfergehäuses 24 fließen. Mittels der Stellschraube 29 lässt sich die so gebildete Engstelle im Querschnitt variieren. Eine in Umfangsrichtung verlaufende Nut 35 dient zur axial starren Befestigung des Stellelements 17 mit dem Kolben 25.

Der Kopfbereich 36 des Stellelements weist eine Verzahnung auf, auf die der Bedienknopf 14 der Sanitärarmatur aufgesteckt und mit einer Sicherungsschraube fixiert werden kann. Der untere Bereich 37 mit verringertem Durchmesser verläuft im zusammengebrauten Zustand durch die bewegliche Ventilscheibe 23, welche hierzu eine U-förmig, nach einer Seite hin offene axiale Ausnehmung aufweist. Die Länge des Bereichs 37 mit verringertem Durchmesser entspricht der Höhe der beweglichen Ventilscheibe 23 zuzüglich des Leerhubs von im Ausführungsbeispiel 6 mm. Der mit Mitnehmern versehene Endbereich 17" dient einerseits als unterer Anschlag für die bewegliche Ventilscheibe 23, anderseits als Steckverbindung für eine im unteren Bereich 18 der Sanitärarmatur einsetzbarer Mischerbaugruppe.

Die Mischerbaugruppe umfasst ein Mischeroberteil 38, welches drehfest aber axial verschieblich mit dem Stellelement 17 verbunden ist, ein Mischerunterteil 41, welches statisch mit dem Gehäuse der Ventilkartusche 11 verbunden ist, sowie zugehörige Dichtungen 42. Zwischen Mischeroberteil 38 und dem als dichtender Gehäuseabschluss dienenden Mischerunterteil 41 sind zwei keramische Mischerscheiben 39 und 40 eingesetzt.

Das Mischeroberteil 38 dient hierbei als Mitnehmer für die drehbare Mischerscheibe 39 und wird drehfest aber axial verschieblich mit dem Zapfen 17" des Stellelements 17 zusammengesteckt. Die statische Mischerscheibe 40 wird zusammen mit dem Mischerunterteil 41 starr in das Gehäuse der Ventilkartusche 11 eingesetzt. Die keramischen Mischerscheiben 39, 40 dienen in an sich bekannter Weise dazu, über separate Zuleitungen 12 zugeführtes Warm- und Kaltwasser in einstellbarem Mischungsverhältnis miteinander zu Mischwasser zu verschneiden. Das so gemischte Mischwasser gelangt dann bei geöffneter Ventileinheit 20 zum Auslauf 15 der Sanitärarmatur.

Im Ausführungsbeispiel ist der Schließantrieb mit einem hydraulischen Dämpfer ausgestattet, ohne dass die Erfindung auf ein solches hydraulisches Wirkprinzip beschränkt wäre. Vielmehr kann als Dämpfer beispielsweise auch ein Reibungsdämpfer oder eine andere vorzugsweise in nur eine Richtung wirksame Reibungsbremse an sich bekannter Bauart eingesetzt werden, um die Rückstellbewegung zu verlangsamen.

## Patentansprüche

1. Selbstschließende Sanitärarmatur, umfassend
- eine Ventilanordnung (20) mit keramischen Ventilscheiben (21, 22, 23), bei dem eine bewegliche Ventilscheibe (23) gegenüber mindestens einer statischen Ventilscheibe (21, 22) zwischen einer Öffnungsstellung und einer Schließstellung verschiebbar angeordnet ist,
**dadurch gekennzeichnet, dass** die Sanitärarmatur umfasst:
- einen Dämpfer (24, 25), welcher ein in einer axialen Richtung verschiebbares Dämpferorgan (25) aufweist, das mit der beweglichen Ventilscheibe (23) über ein in der axialen Richtung linearbewegliches Stellelement (17) mechanisch gekoppelt ist, wobei die bewegliche Ventilscheibe (23) in der axialen Bewegungsrichtung des Stellelements gegenüber der statischen Ventilscheibe (21, 22) verschiebbar angeordnet ist, und
- ein Rückstellelement (26), welches eine Rückstellkraft auf das verschiebbare Dämpferorgan (25) ausübt;
wobei das Dämpferorgan (25) zum Öffnen der Sanitärarmatur von einer Ausgangslage in eine Endlage auslenkbar ist und dabei die bewegliche Ventilscheibe (23) über das Stellelement (17) in die Öffnungsstellung bewegt, von der aus das Dämpferorgan (25) durch die von dem Rückstellelement (26) ausgeübte Rückstellkraft selbsttätig gegen den Widerstand des Dämpfers (24, 25) zurück in die Ausgangslage bewegt wird und dabei die bewegliche Ventilscheibe (23) über das Stellelement (17) in die Schließstellung zurückführt.

2. Sanitärarmatur nach Anspruch 1, mit einer Mischerbaugruppe (37), welche ein feststehendes Verteilelement (40) und ein gegenüber diesem drehbar angeordnetes Mischerbauteil (39) aufweist, wobei die bewegliche Ventilscheibe (23) der Ventilanordnung (20) und das drehbare Mischerbauteil (39) der Mischerbaugruppe (37) beide über das Stellelement (17) verstellbar sind, indem dieses Linearbewegungen auf die bewegliche Ventilscheibe (23) und eine Rotationsbewegungen auf das drehbare Mischerbauteil (39) überträgt.

3. Sanitärarmatur nach einem der vorangehenden Ansprüche, bei dem die Ventilanordnung (20) als keramisches Dreischeiben-Ventil ausgebildet ist und die bewegliche Ventilscheibe (23) zwischen je einer zulaufseitigen (21) und einer auslaufseitigen (22) statischen Ventilscheibe angeordnet ist, wobei die beiden statischen Ventilscheiben (21, 22) einen oder mehrere zueinander korrespondierende Durchlassöffnungen (21', 22') aufweisen und die bewegliche Ventilscheibe (23) zwischen einer Schließstellung, in der sie einen Wasserfluss zwischen den jeweils korrespondierenden Durchlassöffnungen (21', 22') versperrt, und einer Öffnungsstellung, in der sie einen Wasserfluss freigibt, bewegbar ist.

4. Sanitärarmatur nach Anspruch 3, bei der die bewegliche Ventilscheibe (23) auf ihrer zur auslaufseitigen statischen Ventilscheibe (22) weisenden Seite mindestens eine Druckausgleichsfläche aufweist, zu der in einem geschlossenen Ventilzustand über mindestens einen Entlastungskanal (23") eine fluidleitende Verbindung zu mindestens einer der Durchlassöffnungen (21') in der zulaufseitigen Ventilscheibe (21) besteht.

5. Sanitärarmatur nach Anspruch 4, bei der die bewegliche Ventilscheibe (23) mindestens eine Ventilöffnung (23') aufweist, die in der Öffnungsstellung mit den Durchlassöffnungen (21', 22') der zulaufseitigen und der auslaufseitigen Ventilscheibe (21, 22) korrespondiert, und bei der die fluidleitende Verbindung im geschlossenen Ventilzustand durch die Ventilöffnung (23') verläuft.

6. Sanitärarmatur nach Anspruch 4 oder 5, bei der die Druckausgleichsfläche durch eine Ausnehmung auf der einem Auslauf (15) der Sanitärarmatur zugewandten Seite der beweglichen Ventilscheibe (23) gebildet wird.

7. Sanitärarmatur nach einem der vorangehenden Ansprüche, bei der der Dämpfer (24, 25) und das Rückstellelement (26) Teil eines Schließantriebs (16) sind, der derart ausgebildet ist, dass das Stellelement (17) bei seiner Rückbewegung von der Endlage zurück in die Ausgangslage zunächst einen Leerhub ausführt, bevor ein am Stellelement (17) vorgesehenes Mitnehmerorgan (17") eine Schließbewegung der beweglichen Ventilscheibe (23) bewirkt.

8. Sanitärarmatur nach Anspruch 7, bei dem der Dämpfer (24, 25) so ausgebildet ist, dass seine Dämpfungskraft im Anschluss an den Leerhub zumindest vermindert ist.

9. Sanitärarmatur nach einem der vorangehenden Ansprüche, bei dem der Dämpfer (24, 25) einen Hydraulikkolben (25) umfasst, der in einem mit einem Hydraulikmittel gefüllten Hydraulikzylinder (24) läuft und bei einer Rückbewegung zurück in die Ausgangslage Hydraulikmittel verdrängt, welches hierbei durch eine Engstelle (27, 34, 35) hindurchfließen muss.

10. Sanitärarmatur nach Anspruch 8 und 9, bei dem der Hydraulikzylinder (24) in einem Bereich (33) vor der Ausgangslage einen erweiterten Durchmesser aufweist, so dass seine Dämpfungskraft in diesem Bereich (33) vermindert ist.

11. Sanitärarmatur nach Anspruch 9 und vorzugsweise nach Anspruch 10, bei dem die Engstelle (27, 34, 35) durch das Stellelement (17) verläuft.

12. Sanitärarmatur nach Anspruch 11, bei dem die Engstelle (27, 34, 35) durch eine axiale Bohrung (27) des Stellelements (17) gebildet wird, in die eine Stellschraube (29) eingesetzt ist, mittels der der Querschnitt der Engstelle (27, 34, 35) reguliert werden kann.

13. Sanitärarmatur nach dem einem der Ansprüche 9 bis 12, bei in dem Hydraulikkolben (25) mindestens ein Einwegventil vorgesehen ist, durch welches Hydraulikflüssigkeit bei einer Bewegung des Hydraulikkolbens (25) in Öffnungsrichtung fließen kann oder bei dem mindestens ein Kolbenring (30) schwimmend gelagert ist, derart, dass er bei einer Bewegung des Hydraulikkolbens (25) in Schließlichtung dichtend gegen eine Dichtfläche am Kolbenrand anliegt und bei einer Bewegung des Hydraulikkolbens (25) in Öffnungsrichtung von Hydraulikflüssigkeit umströmt werden kann.

14. Sanitärarmatur nach einem der Ansprüche 9 bis 13, bei dem das Stellelement (17) als Kolbenstange ausgebildet, die mit dem Hydraulikkolben (25) axial starr verbunden ist.

15. Sanitärarmatur nach Anspruch 14, bei dem die Kolbenstange (17) drehbar mit dem Hydraulikkolben (25) verbunden ist.

16. Sanitärarmatur nach Anspruch 2 und einem der Ansprüche 7 bis 15, bei dem das Mitnehmerorgan (17") als profilierter Zapfen ausgebildet ist, welcher eine drehinvariante Steckverbindung mit der Mischerbaugruppe (37) ermöglicht.

17. Sanitärarmatur nach Anspruch 1, welche ein metallisches Armaturengehäuse (10) mit einem Wasserauslauf (15) aufweist, wobei ein Wasserfluss von der Ventilanordnung bis zu dem Auslauf (15) über nichtmetallische Leitungen innerhalb des Armaturengehäuses (10) geführt wird.

## Claims

1. Self-closing sanitary fitting, comprising
- a valve arrangement (20) having ceramic valve discs (21, 22, 23), in which a movable valve disc (23) is arranged so as to be displaceable relative to at least one static valve disc (21, 22) between an open position and a closed position,
**characterised in that** the sanitary fitting comprises:
- a damper (24, 25) having a damper member (25) which is displaceable in an axial direction and is mechanically coupled to the movable valve disc (23) via an actuator (17) that is linearly movable in the axial direction, wherein the movable valve disc (23) is arranged so as to be displaceable relative to the static valve disc (21, 22) in the direction of axial movement of the actuator, and
- a restoring element (26) which exerts a restoring force on the displaceable damper member (25);
wherein, to open the sanitary fitting, the damper member (25) is movable from a starting position to an end position and on so moving moves the movable valve disc (23), via the actuator (17), into the open position, from which the damper member (25) is moved automatically by the restoring force exerted by the restoring element (26), against the resistance of the damper (24, 25), back into the starting position and on so moving returns the movable valve disc (23), via the actuator (17), to the closed position.

2. Sanitary fitting according to claim 1, having a mixer assembly (37) which has a fixed distributor element (40) and a mixer component (39) arranged so as to be rotatable relative thereto, the movable valve disc (23) of the valve arrangement (20) and the rotatable mixer component (39) of the mixer assembly (37) both being displaceable via the actuator (17), in that the latter transmits linear movements to the movable valve disc (23) and a rotational movement to the rotatable mixer component (39).

3. Sanitary fitting according to either one of the preceding claims, wherein the valve arrangement (20) is in the form of a ceramic three-disc valve and the movable valve disc (23) is arranged between an inlet-side (21) and an outlet-side (22) static valve disc, wherein the two static valve discs (21, 22) have one or more mutually complementary through-openings (21', 22') and the movable valve disc (23) is movable between a closed position, in which it blocks a flow of water between the respectively complementary through-openings (21', 22'), and an open position, in which it allows water to flow.

4. Sanitary fitting according to claim 3, wherein the movable valve disc (23) has on its side facing towards the outlet-side static valve disc (22) at least one pressure-equalisation surface, to which, in a closed state of the valve, a fluid-conducting connection to at least one of the through-openings (21') in the inlet-side valve disc (21) is made via at least one relief channel (23").

5. Sanitary fitting according to claim 4, wherein the movable valve disc (23) has at least one valve opening (23') which in the open position is complementary to the through-openings (21', 22') of the inlet-side and the outlet-side valve discs (21, 22), and wherein the fluid-conducting connection runs through the valve opening (23) in the closed state of the valve.

6. Sanitary fitting according to claim 4 or 5, wherein the pressure-equalisation surface is formed by a recess in the movable valve disc (23') on the side that faces towards an outlet (15) of the sanitary fitting.

7. Sanitary fitting according to any one of the preceding claims, wherein the damper (24, 25) and the restoring element (26) are part of a closing drive (16) which is constructed in such a way that the actuator (17), during its return movement from the end position back into the starting position, first performs an idle stroke before a driver member (17") provided on the actuator (17) effects a closing movement of the movable valve disc (23).

8. Sanitary fitting according to claim 7, wherein the damper (24, 25) is constructed in such a way that, following the idle stroke, its damping force is at least reduced.

9. Sanitary fitting according to any one of the preceding claims, wherein the damper (24, 25) comprises a hydraulic piston (25) which runs in a hydraulic cylinder (24) filled with a hydraulic medium and, during a return movement back into the starting position, displaces hydraulic medium which, on being displaced, has to flow through a constriction (27, 34, 35).

10. Sanitary fitting according to claim 8 and 9, wherein, in a region (33) before the starting position, the hydraulic cylinder (24) has a larger diameter so that its damping force is reduced in that region (33).

11. Sanitary fitting according to claim 9 and preferably according to claim 10, wherein the constriction (27, 34, 35) runs through the actuator (17).

12. Sanitary fitting according to claim 11, wherein the constriction (27, 34, 35) is formed by an axial bore (27) of the actuator (17), in which bore there is inserted an adjusting screw (29) by means of which the cross-section of the constriction (27, 34, 35) can be regulated.

13. Sanitary fitting according to any one of claims 9 to 12, wherein there is provided in the hydraulic piston (25) at least one one-way valve through which hydraulic fluid is able to flow during movement of the hydraulic piston (25) in the opening direction or wherein at least one piston ring (30) is floatingly mounted in such a way that, during movement of the hydraulic piston (25) in the closing direction, it comes to rest sealingly against a sealing surface on the piston rim and around which hydraulic fluid is able to flow during movement of the hydraulic piston (25) in the opening direction.

14. Sanitary fitting according to any one of claims 9 to 13, wherein the actuator (17) is in the form of a piston rod which is axially rigidly connected to the hydraulic piston (25).

15. Sanitary fitting according to claim 14, wherein the piston rod (17) is rotatably connected to the hydraulic piston (25).

16. Sanitary fitting according to claim 2 and any one of claims 7 to 15, wherein the driver member (17") is in the form of a profiled pin which provides a rotationally invariant plug-in connection to the mixer assembly (37).

17. Sanitary fitting according to claim 1, which has a metallic housing (10) having a water outlet (15), a flow of water being conducted from the valve arrangement to the outlet (15) via non-metallic lines inside the housing (10).

## Revendications

1. Robinetterie sanitaire à fermeture automatique, comprenant
- un ensemble de distribution (20) muni de disques obturateurs (21, 22, 23) en céramique, dans lequel un disque obturateur mobile (23) est agencé à coulissement, par rapport à au moins un disque obturateur statique (21, 22), entre une position d'ouverture et une position de fermeture,
**caractérisée par le fait que** ladite robinetterie sanitaire comprend :
- un amortisseur (24, 25) comportant un organe d'amortissement (25) apte à coulisser dans une direction axiale et couplé mécaniquement audit disque obturateur mobile (23), par l'intermédiaire d'un élément d'actionnement (17) doué de mobilité linéaire dans ladite direction axiale, ledit disque obturateur mobile (23) étant agencé à coulissement par rapport audit disque obturateur statique (21, 22), dans la direction du mouvement axial dudit élément d'actionnement, et
- un élément de rappel (26) appliquant une force de rappel audit organe d'amortissement (25) apte à coulisser ;
l'organe d'amortissement (25) pouvant être dévié d'une position initiale à une position finale en vue d'ouvrir ladite robinetterie sanitaire, en amenant alors le disque obturateur mobile (23), par l'intermédiaire de l'élément d'actionnement (17), à la position d'ouverture à partir de laquelle ledit organe d'amortissement (25) est animé d'un mouvement rétrograde automatique jusqu'à ladite position initiale, sous l'action de la force de rappel développée par l'élément de rappel (26), en opposition à la résistance de l'amortisseur (24, 25), ramenant ainsi ledit disque obturateur mobile (23) à la position de fermeture par l'intermédiaire dudit élément d'actionnement (17).

2. Robinetterie sanitaire selon la revendication 1, pourvue d'un groupe structurel mitigeur (37) comportant un élément répartiteur fixe (40) et un composant structurel mitigeur (39) agencé à rotation par rapport à ce dernier, sachant que le disque obturateur mobile (23) de l'ensemble de distribution (20) et le composant structurel mitigeur rotatif (39) dudit groupe structurel mitigeur (37) peuvent être manoeuvrés, l'un et l'autre, par l'intermédiaire de l'élément d'actionnement (17), du fait que celui-ci répercute des mouvements linéaires sur ledit disque obturateur mobile (23) et des mouvements rotatoires sur ledit composant structurel mitiger rotatif (39).

3. Robinetterie sanitaire selon l'une des revendications précédentes, dans laquelle l'ensemble de distribution (20) est réalisé sous la forme d'une vanne à trois disques en céramique, et le disque obturateur mobile (23) est interposé entre un disque obturateur statique situé, respectivement, côté afflux (21) et côté sortie (22), sachant que les deux disques obturateurs statiques (21, 22) présentent un ou plusieurs orifice(s) de passage (21', 22') mutuellement concordant(s), et que ledit disque obturateur mobile (23) peut être mû entre une position de fermeture, dans laquelle il bloque une circulation d'eau entre les orifices de passage (21', 22') respectivement concordants, et une position d'ouverture dans laquelle il autorise une circulation d'eau.

4. Robinetterie sanitaire selon la revendication 3, dans laquelle le disque obturateur mobile (23) est doté, sur sa face pointant vers le disque obturateur statique (22) situé côté sortie, d'au moins une surface d'équilibrage de pression au niveau de laquelle, dans une condition fermée de la vanne, une liaison de guidage de fluide est instaurée, par l'intermédiaire d'au moins un canal de décharge (23"), avec au moins l'un des orifices de passage (21') pratiqués dans le disque obturateur (21) situé côté afflux.

5. Robinetterie sanitaire selon la revendication 4, dans laquelle le disque obturateur mobile (23) comporte au moins un orifice de distribution (23') qui concorde, dans la position d'ouverture, avec les orifices de passage (21', 22') des disques obturateurs (21, 22) situé côté afflux et situé côté sortie ; et dans laquelle la liaison de guidage de fluide s'opère à travers ledit orifice de distribution (23') à l'état fermé de la vanne.

6. Robinetterie sanitaire selon la revendication 4 ou 5, dans laquelle la surface d'équilibrage de pression est constituée d'un évidement, du côté du disque obturateur mobile (23) qui est tourné vers une sortie (15) de ladite robinetterie sanitaire.

7. Robinetterie sanitaire selon l'une des revendications précédentes, dans laquelle l'amortisseur (24, 25) et l'élément de rappel (26) font partie d'un entraînement de fermeture (16) réalisé de façon telle que l'élément d'actionnement (17) accomplisse tout d'abord une course à vide, lors de son mouvement rétrograde de la position finale vers la position initiale, avant qu'un organe d'entraînement (17"), prévu sur ledit élément d'actionnement (17), ne provoque un mouvement de fermeture du disque obturateur mobile (23).

8. Robinetterie sanitaire selon la revendication 7, dans laquelle l'amortisseur (24, 25) est réalisé de telle sorte que sa force d'amortissement soit au moins réduite dans l'enchaînement direct de la course à vide.

9. Robinetterie sanitaire selon l'une des revendications précédentes, dans laquelle l'amortisseur (24, 25) inclut un piston hydraulique (25) qui se meut dans un cylindre hydraulique (24) empli d'un fluide hydraulique et qui, lors d'un mouvement rétrograde vers la position initiale, refoule du fluide hydraulique devant nécessairement s'écouler en empruntant une zone d'étranglement (27, 34, 35).

10. Robinetterie sanitaire selon les revendications 8 et 9, dans laquelle le cylindre hydraulique (24) présente un diamètre élargi dans une région (33) précédant la position initiale, de telle sorte que sa force d'amortissement soit réduite dans cette région (33).

11. Robinetterie sanitaire selon la revendication 9 et, de préférence, selon la revendication 10, dans laquelle la zone d'étranglement (27, 34, 35) parcourt l'élément d'actionnement (17).

12. Robinetterie sanitaire selon la revendication 11, dans laquelle la zone d'étranglement (27, 34, 35) est constituée d'un perçage axial (27) de l'élément d'actionnement (17), dans lequel est insérée une vis de réglage (29) au moyen de laquelle la section transversale de ladite zone d'étranglement (27, 34, 35) peut être régulée.

13. Robinetterie sanitaire selon l'une des revendications 9 à 12, dans laquelle le piston hydraulique (25) renferme au moins une vanne à voie unique pouvant être empruntée par du liquide hydraulique, lors d'un mouvement dudit piston hydraulique (25) dans la direction d'ouverture, ou au niveau de laquelle au moins un segment (30) dudit piston est monté flottant de façon telle qu'il soit en applique de manière étanche, contre une surface d'étanchement située sur la jupe dudit piston, lors d'un mouvement dudit piston hydraulique (25) dans la direction de fermeture, et qu'il puisse être cerné par du liquide hydraulique lors d'un mouvement dudit piston hydraulique (25) dans la direction d'ouverture.

14. Robinetterie sanitaire selon l'une des revendications 9 à 13, dans laquelle l'élément d'actionnement (17) est réalisé sous la forme d'une tige de piston, qui est reliée rigidement au piston hydraulique (25) dans le sens axial.

15. Robinetterie sanitaire selon la revendication 14, dans laquelle la tige (17) de piston est reliée au piston hydraulique (25) avec faculté de rotation.

16. Robinetterie sanitaire selon la revendication 2 et l'une des revendications 7 à 15, dans laquelle l'organe d'entraînement (17") est réalisé sous la forme d'un tenon profilé autorisant une liaison, avec le groupe structurel mitigeur (37), instaurée par emboîtement et verrouillage rotatif.

17. Robinetterie sanitaire selon la revendication 1, pourvue d'un carter métallique (10) présentant une sortie d'eau (15), sachant qu'une circulation d'eau est guidée, depuis l'ensemble de distribution jusqu'à ladite sortie (15), en empruntant des conduits non métalliques à l'intérieur dudit carter (10) de la robinetterie.
